# EUROPÄISCHE PATENTANMELDUNG

(11) **EP 1 033 196 A1**
(43) Veröffentlichungstag der Anmeldung: **06.09.2000**
(21) Anmeldenummer: 00101377.0
(22) Anmeldetag: 24.01.2000
(51) Int. Cl.: B23F 23/06

(54) **Werkstück-Spannvorrichtung**

(30) Priorität: 25.02.1999 DE 29903418 U
(71) Anmelder: LIEBHERR-VERZAHNTECHNIK GmbH, 87437 Kempten (DE)
(72) Erfinder: Adrian, Rolf, 87471 Durach (DE)
(74) Vertreter: Laufhütte, Dieter, Dr.-Ing.

(57) **Zusammenfassung**

Die Erfindung betrifft eine Werkstück-Spannvorrichtung für Verzahnungsmaschinen, insbesondere Wälz-Fräs-Maschinen, mit Bearbeitungs-Spannmitteln zum Spannen des Werkstücks (4) bei der Bearbeitung mit einem Hilfs-Greifer (14) zum Greifen des Werkstücks (4) beim Werkstückwechsel.

Der Hilfs-Greifer (14) ist zwischen einer Greif-Position und einer zurückgezogenen Bearbeitungs-Position bewegbar.

Der Hilfs-Greifer (14) ist als Spannzange ausgebildet und in einen Abschnitt (13) der Bearbeitungs-Spannmittel (5,8) integriert, insbesondere versenkbar.

Der Hilfs-Greifer (14) ist konzentrisch zu den Bearbeitungs-Spannmitteln (5,8) angeordnet, insbesondere verschieblich entlang der Längsachse der Bearbeitungs-Spannmittel.

## Beschreibung

Die vorliegende Erfindung betrifft eine Werkstück-Spannvorrichtung für Verzahnungsmaschinen, insbesondere Wälz-Fräs-Maschinen.

Um bei der Bearbeitung von Zahnrädern die Nebenzeiten zu verringern, darf für den Werkstückwechsel nur so wenig wie möglich Zeit verloren werden. Hierzu können Maschinentische verwendet werden, die wechselweise in den und aus dem Bearbeitungsraum der Verzahnungsmaschine schwenkbar sind, so daß während der Bearbeitung eines Werkstücks ein weiteres Werkstück bereits auf dem herausgeschwenkten Maschinentisch gespannt werden kann.

Problematisch ist dies insbesondere bei wellenförmigen Werkstücken, die bei bekannten Werkstück-Spannvorrichtungen dazu neigen, während des Ein- bzw. Herausschwenkens des Maschinentisches aus der Spannvorrichtung heraus bzw. vom Maschinentisch zu fallen.

Der vorliegenden Erfindung liegt daher die Aufgabe zugrunde, eine verbesserte Werkstück-Spannvorrichtung der genannten Art zu schaffen, welche die Nachteile bekannter Spannvorrichtungen vermeidet. Insbesondere soll ein rascher und sicherer Werkstückwechsel ermöglicht werden.

Erfindungsgemäß wird diese Aufgabe durch eine Werkstück-Spannvorrichtung der genannten Art gelöst, die Bearbeitungs-Spannmittel zum Spannen des Werkstücks bei der Bearbeitung und einen Hilfs-Greifer zum Greifen des Werkstückes beim Werkstückwechsel aufweist.

Es ist also zusätzlich zu den Bearbeitungs-Spannmitteln ein Hilfs-Greifer vorgesehen, der das Werkstück greift, wenn dieses nicht in den Bearbeitungs-Spannmitteln eingespannt ist. Die Bearbeitungs-Spannmittel können zum Werkstückwechsel gelöst werden, ohne daß das Werkstück gleich vom Maschinentisch fällt. Insbesondere kann der Maschinentisch gefahrlos zusammen mit dem Werkstück in den bzw. aus dem Bearbeitungsraum der Verzahnungsmaschine geschwenkt werden.

Gemäß einer vorteilhaften Ausführung der Erfindung hält der Hilfs-Greifer das Werkstück in einer an die Bearbeitungs-Spannmittel angesetzten Position. Der Hilfs-Greifer ist zusammen mit den Bearbeitungs-Spannmitteln bewegbar, so daß das Werkstück bereits in der richtigen Einspannlage zusammen mit dem Maschinentisch bewegt werden kann. Der Werkstückwechsel kann hauptzeitparallel erfolgen.

In Weiterbildung der Erfindung ist der Hilfs-Greifer relativ zu den Bearbeitungs-Spannmitteln zwischen einer Greifposition und einer zurückgezogenen Bearbeitungs-Position bewegbar. Der Hilfs-Greifer kann zum Werkstückwechsel das Werkstück an Stellen greifen, die von der Verzahnungsmaschine zu bearbeiten sind. Für die Bearbeitung des Werkstücks ist der Hilfs-Greifer aus dem Bearbeitungsraum des Werkzeugs entfernbar.

Vorzugsweise ist der Hilfs-Greifer als Spannzange ausgebildet, so daß das Werkstück beim Werkstückwechsel sicher und fest gegriffen werden kann.

Um eine kompakte Anordnung zu erreichen und den Bearbeitungsraum des Werkzeugs nicht zu stören, ist der Hilfs-Greifer vorzugsweise in einem Abschnitt der Bearbeitungs-Spannmittel integriert, insbesondere in diesen versenkbar ausgebildet. Der Hilfs-Greifer kann in einen Innenraum der Bearbeitungs-Spannmittel eingefahren werden, um den Arbeitsraum des Werkzeugs freizugeben, wenn das Werkstück alleine von den Bearbeitungs-Spannmitteln aufgespannt ist. Nach Beenden der Werkstückbearbeitung kann der Hilfs-Greifer aus den Bearbeitungs-Spannmitteln ausgefahren werden, um das Werkstück zu greifen und den Werkstückwechsel zu ermöglichen.

In Weiterbildung der Erfindung besitzt der Hilfs-Greifer eine Hülse, dessen vorderes Ende als Greifabschnitt ausgebildet ist. Zum Greifen bzw. zum Loslassen des Werkstücks kann der Greifabschnitt radial zusammengefahren bzw. aufgeweitet werden. Besonders vorteilhaft ist eine Ausbildung der Erfindung, bei der mehrere, insbesondere paarweise gegenüberliegende Spannfinger vorgesehen sind, zwischen denen das Werkstück geklemmt werden kann. Die vorzugsweise zungenförmigen Spannfinger können den Greifabschnitt der Greifer-Hülse bilden und sind radial aufeinander zu und voneinander weg bewegbar.

Um eine weitgehende Automatisierung des Werkstückwechsels zu erreichen, ist zweckmäßigerweise zum Schließen und/oder Öffnen des Hilfs-Greifers eine Betätigungseinheit vorgesehen. Eine besonders einfache Anordnung kann dadurch erreicht werden, daß der Hilfs-Greifer elastisch in seine Greifstellung vorgespannt ist, so daß die Betätigungseinheit nur zum Öffnen des Hilfs-Greifers ausgebildet ist. Die Betätigungseinheit weitet den Greifabschnitt, insbesondere die Spannfinger entgegen der elastischen Vorspannung radial auf, um das Werkstück freizugeben.

Umgekehrt wäre es auch möglich, den Hilfs-Greifer durch die Betätigungseinheit zu schließen. Hierdurch könnte eine besonders hohe Greifkraft erreicht werden. Das Öffnen könnte durch elastische Rückstellung des Hilfs-Greifers oder auch durch eine entsprechend ausgebildete Betätigungseinheit erfolgen. Die zuvor beschriebene Ausführung, bei der das Werkstück vom Hilfs-Greifer durch elastische Vorspannung gegriffen wird, zeichnet sich bei einer einfachen Anordnung durch eine definierte Greifkraft aus, die ausreicht, das Werkstück sicher zu halten und eine Beschädigung des Werkstücks verhindert.

In Weiterbildung der Erfindung weisen die Betätigungseinheit und der Hilfs-Greifer ineinander schiebbare Hülsen auf deren Durchmesser derart abgestimmt sind, daß der Greifer durch axiales Verschieben der Hülsen zueinander öffnet bzw. schließt. Die ineinander geschobene Anordnung der zwei Hülsen ist sehr kompakt. Darüber hinaus ist ein kleine Betätigungskraft in axialer Richtung der Hülsen ausreichend, die effizient in eine Spreizbewegung des Greifabschnittes der Greifer-Hülse umgesetzt wird. Vorzugsweise sind an der Greifer-Hülse und/oder an der Betätigungshülse Nocken zum Öffnen bzw. Schließen des Greifabschnittes vorgesehen. Mit derartigen Nocken wird auch bei kleinen axialen Verschiebungen der Hülsen zueinander eine ausreichend große Schließ- bzw. Öffnungsbewegung des Greifers erreicht.

Vorzugsweise ist im Inneren der Greifer-Hülse eine Öffner-Hülse angeordnet, die den Greifabschnitt der Greifer-Hülse radial aufspreizen kann. Um hohe Klemmkräfte zu erreichen, kann zusätzlich eine außenliegende Schließ-Hülse vorgesehen sein, die die Greifer-Hülse umgibt und deren Greifabschnitt in radialer Richtung zusammendrücken kann. Eine solche Schließ-Hülse kann ebenfalls Nocken aufweisen, die die axiale Verschiebung der Hülsen zueinander in die Greifbewegung umsetzen.

Die Nocken können vorzugsweise als ringförmige Vorsprünge am Außen- bzw. Innenumfang der entsprechenden Hülse mit jeweils komplementär geneigten Flanken ausgebildet sein, so daß die Nocken bei axialer Verschiebung der Hülsen zueinander entlang ihrer geneigten Flanken aufeinander gleiten und die radiale Bewegung des Greifabschnittes der Greifer-Hülse bewirken.

In Weiterbildung der Erfindung bilden die Betätigungseinheit und der Hilfs-Greifer eine Einheit, die in einer Greiferausnehmung in den Bearbeitungs-Spannmitteln aufgenommen ist. Die Betätigungseinheit und der Hilfs-Greifer können vormontiert in die Greiferausnehmung eingesetzt werden, wodurch sich der Zusammenbau der Spannvorrichtung vereinfacht.

Gemäß einer bevorzugten Ausführungsform der Erfindung ist der Hilfs-Greifer konzentrisch zu den Bearbeitungs-Spannmitteln angeordnet und insbesondere entlang der Längsachse der Bearbeitungs-Spannmittel verschieblich. Die Bearbeitungs-Spannmittel können eine sich entlang der Längsachse erstreckende, vorzugsweise zylindrische Werkstückauflage aufweisen, gegen deren Stirnseite das Werkstück ansetzbar und spannbar ist. Der Hilfs-Greifer ist in diesem Fall zweckmäßigerweise koaxial zu der Werkstückauflage angeordnet und über diese entlang der Längsachse auf das an der Stirnseite anliegende Werkstück schiebbar. Der Greifabschnitt des Hilfs-Greifers greift das Werkstück an dessen Außenumfang in der an die Bearbeitungs-Spannmittel angesetzten Stellung, so daß das Werkstück in einer der Bearbeitungs-Einspannposition entsprechenden Lage zusammen mit dem Maschinentisch bewegt werden kann.

Die Bearbeitungs-Spannmittel sind zweckmäßigerweise zweigeteilt, d.h. sie besitzen einen Halter und einen Gegenhalter, zwischen denen das Werkstück einspannbar ist. Vorzugsweise ist der Halter an einem in den Bearbeitungsraum und aus diesem heraus bewegbaren Maschinentisch angeordnet, währen der Gegenhalter fest im Bearbeitungsraum angeordnet sein kann. Fest meint dabei nicht, daß der Gegenhalter keine Spannbewegung auf den Halter zu ausführen könnte. Fest heißt in diesem Zusammenhang, daß der Gegenhalter nicht mit dem Tisch mitgeführt wird, wenn dieser zum Zweck des Werkstückwechsels den Arbeitsraum der Maschine verläßt. Ein fester Gegenhalter definiert die Arbeitsposition des Werkstücks und kann als Referenzpunkt für die Verzahnungsmaschine verwendet werden.

Um das Greifen des Werkstücks während der Bewegung des Maschinentisches zu gewährleisten, ist der Hilfs-Greifer dem beweglichen Maschinentisch zugeordnet.

Der Hilfs-Greifer kann grundsätzlich bei verschiedenen Maschinentischen Verwendung finden. Beispielsweise kann der Hilfs-Greifer bei Maschinentischen mit horizontaler Tischachse eingesetzt werden. Besonders vorteilhaft ist die Anordnung des Hilfs-Greifers jedoch bei hängend angeordneten Maschinentischen. Hierbei können der Halter der Bearbeitungs-Spannmittel und der Hilfs-Greifer jeweils hängend angeordnet sein, so daß das Werkstück bei der Bewegung des Maschinentisches unter dem Halter vom Hilfs-Greifer festgehalten hängt.

Diese und weitere Merkmale gehen außer aus den Ansprüchen auch aus der nachfolgenden Beschreibung und den zugehörigen Zeichnungen hervor, anhand denen nachfolgend ein bevorzugtes Ausführungsbeispiel der Erfindung erläutert wird. In den Zeichnungen zeigen:
- Fig. 1: eine Seitenansicht eines Maschinentisches mit einer Werkstück-Spannvorrichtung gemäß einer bevorzugten Ausführungsform der vorliegenden Erfindung in einer Werkstückwechsel-Position (rechts) und einer Bearbeitungs-Position (links),
- Fig. 2: eine Draufsicht auf den Maschinentisch gemäß Fig. 1,
- Fig. 3: eine vergrößerte Darstellung der Werkstück-Spannvorrichtung in der Bearbeitungsstellung in einem Schnitt entlang der Linie A-A in Fig. 5,
- Fig. 4: eine vergrößerte Darstellung der Werkstück-Spannvorrichtung ähnlich Fig. 3, wobei die Werkstück-Spannvorrichtung in einer Werkstückwechsel-Stellung ist, in einem Schnitt entlang der Linie A-A in Fig. 5, und
- Fig. 5: eine Draufsicht von unten auf die Werkstück-Spannvorrichtung.

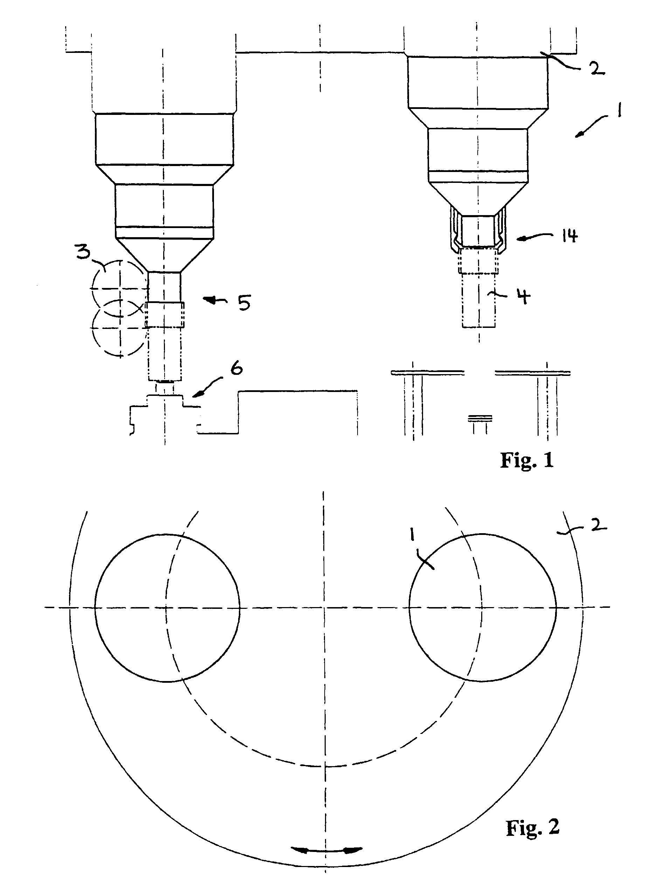

Wie in Fig. 1 gezeigt, ist die Werkstück-Spannvorrichtung 1 hängend unter einem ebenfalls hängenden Maschinentisch 2 angeordnet. Der Maschinentisch 2 ist als Revolvertisch ausgebildet und um eine Achse schwenkbar, so daß die Werkstück-Spannvorrichtung 1 in den Arbeitsraum einer nicht näher dargestellten Wälz-Fräs-Maschine in eine Bearbeitungs-Position und aus dem Arbeitsraum in eine Werkstückwechsel-Position geschwenkt werden kann. In der Bearbeitungs-Position (gemäß Fig. 1 die linke Stellung) kann von einem Werkrad 3 die Verzahnung eines Werkstücks 4 gefräst werden, während in der Werkstückwechsel-Position das fertig bearbeitete Werkstück 4 aus der Werkstück-Spannvorrichtung herausgenommen und ein zu bearbeitendes Werkstück in diese eingesetzt werden kann, wie später noch näher erläutert werden wird.

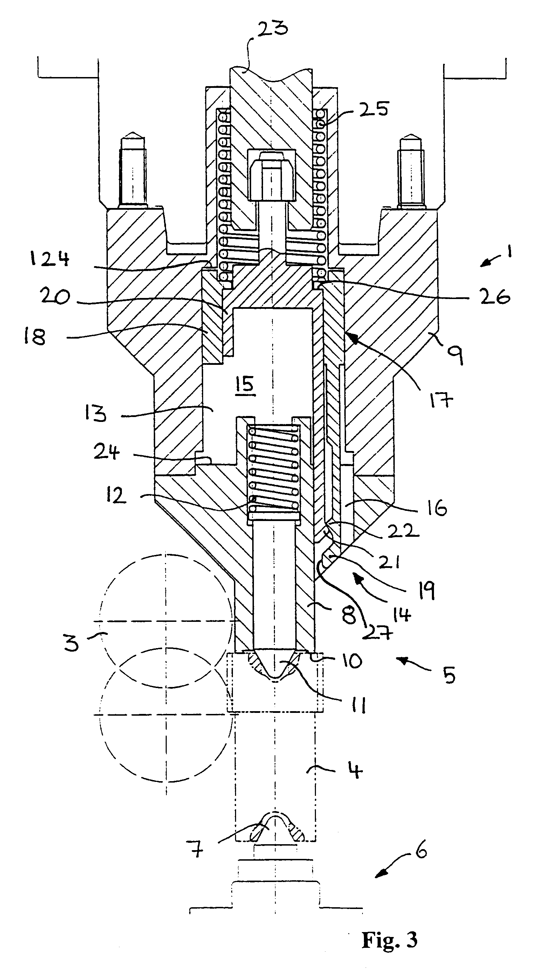

In der Bearbeitungs-Position ist das Werkstück 4 zwischen einem Halter 5 und einem Gegenhalter 6 (vgl. Fig. 3) eingespannt. Die Einspannung erfolgt dabei zwischen Spitzen an den Stirnseiten des Werkstücks ähnlich einem Reitstock mit Pinole bei einer Drehmaschine. Der Gegenhalter 6 ist im Gegensatz zu dem Halter 5 fest im Arbeitsraum angeordnet, d.h. der Gegenhalter 6 wird nicht mit dem Maschinentisch 2 mitgeführt, wenn dieser zum Zwecke des Werkstückwechsels den Arbeitsraum der Maschine verläßt. Der Halter 5 sowie der Gegenhalter 6 weisen Zentrierspitzen 7 auf zwischen denen das Werkstück 4 zentriert eingespannt wird.

Wie Fig. 3 zeigt, besitzt die Werkstück-Spannvorrichtung 1 eine rotationssymmetrische Werkstückauflage, die über einen Träger 9 am Maschinentisch 2 befestigt ist. Die Werkstückauflage 8 besitzt ausgehend vom Träger 9 einen im wesentlichen kreiskegeligen Abschnitt, an den ein zylindrischer Stirnabschnitt anschließt (vgl. Fig. 3). Die dem Werkstück 4 zugewandte Stirnseite der Werkstückauflage 8 ist vorzugsweise mit Mitnahmeschneiden 10 versehen, die mit der Stirnseite des Werkstückes 4 in Eingriff stehen, wenn das Werkstück 4 gegen die Stirnseite der Werkstückauflage 8 gespannt ist.

Im Inneren der Werkstückauflage 8 ist in einer zur Längsachse der Werkstückauflage 8 konzentrischen Ausnehmung eine Zentrierspitze 11 aufgenommen, die begrenzt zwischen einer herausragenden Stellung, in der die Zentrierspitze 11 aus der Stirnseite der Werkstückauflage 8 herausragt, und einer eingefahrenen Stellung, in der die Zentrierspitze 11 gänzlich im Inneren der Werkstückauflage 8 aufgenommen ist, axial verschieblich ist. Eine Feder 12, die sich an einem Absatz der zentralen Ausnehmung der Werkstückauflage 8 abstützt, drückt die Zentrierspitze 11 in ihre vorspringende Stellung. Beim Ansetzen eines Werkstücks 4 an die Werkstückauflage 8 richtet die Zentrierspitze 11 das Werkstück 4 aus und wird bei einer Bewegung des Werkstücks 4 gänzlich zur Stirnseite der Werkstückauflage 8 hin in das Innere der Werkstückauflage 8 ein wenig zurückgedrückt.

Die Werkstück-Spannvorrichtung 1 besitzt konzentrisch zu ihrer Längsachse eine Greiferausnehmung 13, in der ein Hilfs-Greifer 14 aufgenommen ist, mit dem das Werkstück 4 gegriffen werden kann, wenn das Werkstück 4 nicht zwischen den als Bearbeitungs-Spannmittel wirkenden Halter 5 und Gegenhalter 6 eingespannt ist und mit dem Maschinentisch 2 in die Werkstückwechsel-Position geschwenkt werden soll.

Die Greiferausnehmung 13 besitzt einen Hohlzylinder-Abschnitt 15, der über Durchtrittsausnehmungen 16 mit der Außenseite der Werkstück-Spannvorrichtung 1 verbunden ist. Der Hohlzylinder-Abschnitt 15 ist dabei im Bereich des Trägers 9 vorgesehen, während die Durchtrittsöffnungen 16 in der Werkstückauflage 8 ausgebildet sind (vgl. Fig. 3). Die Durchtrittsöffnungen 16 liegen dabei auf einem Kreis und münden auf die Außenumfangsfläche des zylindrischen Stirnabschnitts der Werkstückauflage 8.

Der als Spannzange ausgebildete Hilfs-Greifer 14 besitzt die Form einer Hülse, die in der Greiferausnehmung 13 axial verschieblich sitzt. Die Hülse 17 des Hilfs-Greifers 14 ist dabei in einen Bund 18 und Spannfinger 19 unterteilt, die integral einstückig mit dem Bund ausgebildet sind oder als separate Elemente im Bund 18 befestigt sind und sich die zylindrische Form des Bundes 18 im wesentlichen fortsetzend axial erstrecken. Die Spannfinger 19 sind dabei gegenüber der Innen- und Außenkontur des Bundes 18 leicht abgesetzt, so daß die Greifer-Hülse17 nur mit dem Bund 18 in der Greiferausnehmung 13 geführt ist.

Die Spannfinger 19 sind paarweise einander gegenüberliegend angeordnet, um das Werkstück 4 zwischen sich greifen zu können. Die Durchtrittsöffnungen 16 in der Werkstückauflage 8 sind dabei entsprechend positioniert, so daß die Spannfinger 19 durch die Durchtrittsöffnungen 16 hindurch geschoben werden können.

Der Hilfs-Greifer 14 ist im Bereich der Spannfinger 19 elastisch verformbar. Die Spannfinger 19 können in radialer Richtung nach außen wegbiegen, so daß sich der von den Fingerspitzen begrenzte Innendurchmesser vergrößert. Dies ermöglicht ein elastisch vorgespanntes Greifen des Werkstücks 4, wie noch beschrieben werden wird. Die Durchtrittsöffnungen 16 sind dabei in radialer Richtung breit genug ausgebildet, um die radiale Verformung der Spannfinger 19 zu ermöglichen.

Im Inneren der Greifer-Hülse 17 ist eine Öffner-Hülse 20 aufgenommen, die im Bereich des Bundes 18 in der Greifer-Hülse 17 geführt und relativ zu dieser axial verschieblich ist. Die Öffner-Hülse 20 besitzt entsprechend der Greifer-Hülse 17 sich axial erstreckende Finger, die zusammen mit den Spannfingern 19 durch die Durchtrittsöffnungen 16 hindurch geschoben werden können.

An ihrem dem Werkstück 4 zugewandten Ende besitzt die Öffner-Hülse 20 Nocken 21, die als ringförmig umlaufende Vorsprünge auf der Außenumfangsfläche der Öffnerfinger ausgebildet sind. Die Nocken 21 besitzen dabei zu beiden axialen Seiten hin dachförmig geneigte Flanken (vgl. Fig. 3). Die Greifer-Hülse 17 besitzt an ihrem dem Werkstück 4 zugewandten Ende ebenfalls Nocken 22, die als nach innen vorspringende Wölbungen an der Innenseite der Spannfinger 19 ausgebildet sind. Hierbei sind die Flanken der Nocken 22 ebenfalls geneigt, so daß dann, wenn die Öffner-Hülse und die Greifer-Hülse axial zueinander verschoben werden, die Nocken 21 und 22 auf den entsprechenden Flanken aufeinander abgleiten, so daß die Spannfinger 19 radial nach außen gedrückt werden. Die Finger der Öffner-Hülse 20 gleiten dabei auf Außenflächen bzw. Führungsflächen der Werkstückauflage 8, so daß sie nicht nach innen weggedrückt werden können, sondern die Spannfinger 19 nach außen drücken.

Wie Fig. 3 zeigt, ist die Öffner-Hülse 20 über eine Betätigungsstange 23 in axialer Richtung verschiebbar, wobei die Betätigungsstange 23 über einen nicht näher dargestellten Stellantrieb betätigt werden kann. Der axiale Verschiebeweg der Öffner-Hülse 20 ist in beide Richtungen begrenzt, wobei die Öffner-Hülse 20 in beiden Endstellungen an einem jeweiligen Anschlag ansteht.

Die Greifer-Hülse 17 ist in axialer Richtung ebenfalls nur begrenzt beweglich, sie steht in ihren beiden Endstellungen ebenfalls an Anschlägen an. Wie Fig. 3 zeigt, werden die Anschläge von den Stirnflächen des Bundes 18 gebildet, die an damit zusammenwirkenden Vorsprüngen 24 und 124 des Zylinderabschnitts 15 der Greiferausnehmung 13 in der jeweiligen Stellung anstehen.

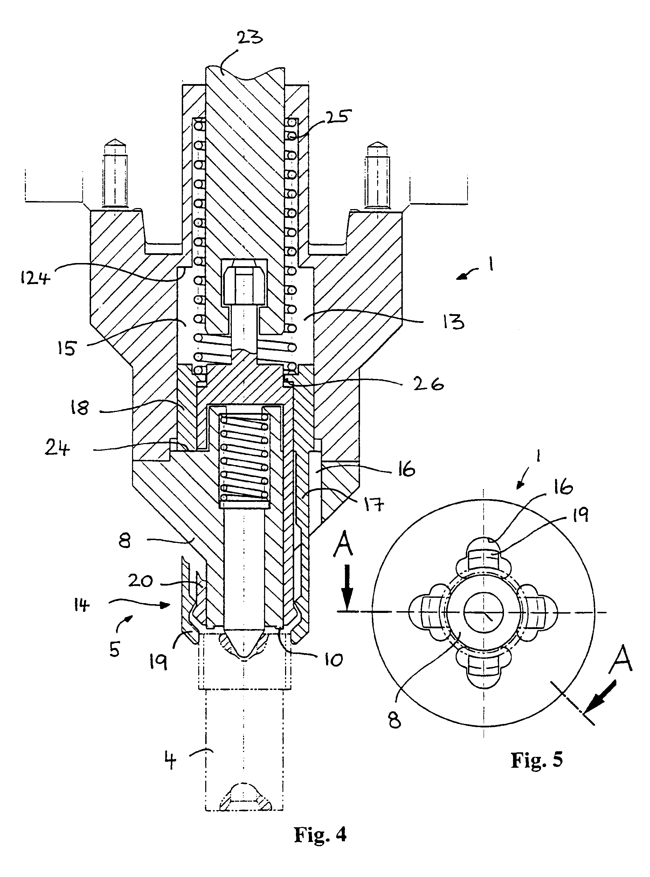

Die Greifer-Hülse 17 wird von einer Greiferfeder 25 zu ihrer ausgefahrenen Endstellung hin vorgespannt, d.h. die Feder 25 versucht die Greifer-Hülse 17 gegen den Anschlag 24 zu drücken (vgl. Fig. 3 und Fig. 4). Um die Greifer-Hülse 17 entgegen der Federvorspannung durch die Greiferfeder 25 in die eingefahrene Stellung, d.h. gemäß Fig. 3 und 4 nach oben zu bewegen, besitzt die Greifer-Hülse und/oder die Öffner-Hülse 20 Mitnehmer 26, die die Greifer-Hülse 17 zu ihrer eingefahrenen Stellung hin mitnehmen, wenn die Öffner-Hülse 20 in diese Stellung bewegt wird. Die Mitnehmer 26 wirken dabei nur bei einer Aufwärtsbewegung, d.h. bei einer Rückzugsbewegung zur versenkten Stellung hin, treten jedoch außer Eingriff bzw. wirken nicht, wenn die Öffner-Hülse 20 nach unten zu ihrer ausgefahrenen Stellung hin bewegt wird. Die Bewegung der Greifer-Hülse 17 nach unten zur ausgefahrenen Stellung hin wird durch die Feder 25 bewirkt.

Die axiale Beweglichkeit der Greifer-Hülse 17 und der Öffner-Hülse 20 ist mittels der wegbegrenzenden Anschläge so aufeinander abgestimmt, daß die Nocken 21 an der Öffner-Hülse 20 und die Nocken 22 an der Greifer-Hülse 17 außer Eingriff sind, wenn beide Hülsen in der vollständig ausgefahrenen Stellung sind (vgl. Fig. 4). Die Spannfinger 19 der Greifer-Hülse 17 sind in dieser Stellung nicht nach außen weggespreizt, sondern befinden sich in ihrer elastisch vorgespannten Greiferstellung. Beim gemeinsamen Ausfahren der Teile 17 und 21 ist 19 geöffnet und kann so über das Werkstück fahren. Nach Erreichen des definierten Festanschlages 24 bewegt sich 17 nicht mehr. 21 bewegt sich weiter und gibt 22 frei. Dadurch schließt 19 und hält das Werkstück. Die Finger der Öffner-Hülse 20 sind kurz genug, um nicht über die Werkstückauflage 8 vorzuspringen und das Spannen des Werkstücks zu behindern.

Um den Hilfs-Greifer 14 zu öffnen, wird die Öffner-Hülse 20 zu der zurückgezogenen Stellung hin bewegt. Hierbei treten die Mitnehmer 26 zwischen der Öffner-Hülse 20 und der Greifer-Hülse 17 erst in Eingriff, nachdem die Öffner-Hülse 20 ein anfängliches Wegstück zurückgelegt hat. Dieses anfängliche Wegstück ist dabei groß genug, um die Nocken 21 an der Öffner-Hülse 20 auf die Nocken 22 an der Greifer-Hülse 17 zu schieben, um die Spannfinger 19 nach außen aufzuspreizen und den Hilfs-Greifer 14 hierdurch zu öffnen. Die Vorspannung der Greiferfeder 25 ist dabei ausreichend groß, um die Greifer-Hülse 17 in der vollständig ausgefahrenen Endstellung zu halten, bis die Mitnehmer 26 zwischen der Öffner-Hülse 20 und der Greifer-Hülse 17 in Eingriff treten. Erst durch den Eingriff der Mitnehmer 26 wird dann, nachdem die Spannfinger 19 aufgespreizt wurden, die Greifer-Hülse 17 von der Öffner-Hülse 20 zu der zurückgezogenen Stellung hin mitgenommen.

Der Betätigungsmechanismus für den Hilfs-Greifer 14 bewirkt also beim Einfahren bzw. Entfernen des Hilfs-Greifers 14 aus dem Arbeitsbereich, daß der Hilfs-Greifer 14 zunächst geöffnet wird und dann in das Innere der Werkstück-Spannvorrichtung zurückgeschoben wird. Beim Ausfahren bewirkt der Betätigungsmechanismus, insbesondere die Greiferfeder 25, entgegengesetzt, daß der Hilfs-Greifer 14 in der geöffneten Stellung ausgefahren wird und sich die Spannfinger 19 erst dann schließen, wenn der Hilfs-Greifer 14 die ausgefahrene Stellung völlig erreicht hat, nämlich dann, wenn der Bund 18 am Anschlag 24 ansteht und die Öffner-Hülse 20 weiterbewegt wird und die Mitnehmer 26 außer Eingriff treten.

Nachfolgend wird der Betrieb und die Wirkungsweise der Werkstück-Spannvorrichtung 1 näher erläutert.

Ein neu zu bearbeitendes Werkstück 4 kann in die Spannvorrichtung eingesetzt werden, wenn diese zusammen mit dem Maschinentisch 2 in die Werkstückwechsel-Position aus dem Arbeitsraum der Verzahnungsmaschine heraus geschwenkt wurde (vgl. Fig. 1 rechte Seite). Der Hilfs-Greifer 14 wird dann in der geöffneten Stellung ausgefahren und schließt sich dann in der vollständig ausgefahrenen Stellung wie zuvor beschrieben, um das Werkstück 4 zu greifen. Die Spannfinger greifen das Werkstück mit nach innen vorspringenden Klemmflächen 27 an ihren Spitzen.

Der Maschinentisch 2 wird dann zusammen mit der Werkstück-Spannvorrichtung 1 und dem Werkstück 4, das unter der Werkstück-Spannvorrichtung 1 hängt und vom Hilfs-Greifer 14 gehalten ist, in den Arbeitsraum der Verzahnungsmaschine geschwenkt. Im Arbeitsraum wird es durch Zusammenfahren des Halters 5 und des Gegenhalters 6 zwischen diesen beiden an seinen beiden Stirnseiten eingespannt. Der Hilfs-Greifer 14 wird dann in das Innere der Werkstück-Spannvorrichtung 1 zurückgefahren, um das Werkstück 4 mit dem Werkrad 3 bearbeiten zu können.

Nachdem die Bearbeitung erfolgt ist, wird der Hilfs-Greifer 14 wieder ausgefahren, um das Werkstück 4 erneut zu greifen und durch Herausschwenken des Maschinentisches 2 wieder aus dem Arbeitsraum der Verzahnungsmaschine herauszuführen. Hauptzeitparallel während der Bearbeitung des Werkstücks kann an einem zweiten Maschinentisch bereits ein neues Werkstück in der beschriebenen Art und Weise eingespannt werden, das dann im Wechsel mit dem fertig bearbeiteten Werkstück in den Arbeitsraum geführt werden kann. Hierdurch wird ein effizienter Werkstückwechsel erreicht.

## Patentansprüche

1. Werkstück-Spannvorrichtung für Verzahnungsmaschinen, insbesondere Wälz-Fräs-Maschinen, mit Bearbeitungs-Spannmitteln zum Spannen des Werkstücks bei der Bearbeitung, gekennzeichnet durch einen Hilfs-Greifer (14) zum Greifen des Werkstücks (4) beim Werkstückwechsel.

2. Werkstück-Spannvorrichtung nach Anspruch 1, wobei der Hilfs-Greifer (14) das Werkstück (4) in einer an die Bearbeitungs-Spannmittel (5, 8) angesetzten Position hält.

3. Werkstück-Spannvorrichtung nach einem der vorhergehenden Ansprüche, wobei der Hilfs-Greifer (14) zwischen einer Greif-Position und einer zurückgezogenen Bearbeitungs-Position bewegbar ist.

4. Werkstück-Spannvorrichtung nach einem der vorhergehenden Ansprüche, wobei der Hilfs-Greifer (14) als Spannzange ausgebildet ist.

5. Werkstück-Spannvorrichtung nach einem der vorhergehenden Ansprüche, wobei der Hilfs-Greifer (14) in einen Abschnitt (13) der Bearbeitungs-Spannmittel (5, 8) integriert, insbesondere versenkbar ist.

6. Werkstück-Spannvorrichtung nach einem der vorhergehenden Ansprüche, wobei der Hilfs-Greifer (14) eine Hülse (20) aufweist, deren vorderes Ende als Greifabschnitt (19) ausgebildet und zum Greifen und/oder Loslassen des Werkstücks (4) radial verjüngbar und/oder aufweitbar ist.

7. Werkstück-Spannvorrichtung nach einem der vorhergehenden Ansprüche, wobei der Hilfs-Greifer (14) mehrere, vorzugsweise paarweise gegenüberliegende, Spannfinger (19) aufweist, zwischen denen das Werkstück (4) klemmbar ist.

8. Werkstück-Spannvorrichtung nach einem der vorhergehenden Ansprüche, wobei eine Betätigungseinheit (20, 21, 22, 23, 25, 26) zum Schließen und/oder Öffnen des Hilfs-Greifers (14) vorgesehen ist, wobei vorzugsweise der Hilfs-Greifer elastisch in seine Greifstellung vorgespannt und die Betätigungseinheit zum Öffnen des Hilfs-Greifers ausgebildet ist.

9. Werkstück-Spannvorrichtung nach dem vorhergehenden Anspruch, wobei die Betätigungseinheit und der Hilfs-Greifer ineinander schiebbare Hülsen (20, 17) aufweisen, deren Durchmesser derart abgestimmt sind, daß der Hilfs-Greifer (14) durch axiales Verschieben der Hülsen zueinander öffnet bzw. schließt, wobei vorzugsweise die Greifer-Hülse (17) und/oder die Betätigungs-Hülse (20) Nocken (22, 21) zum Öffnen und/oder Schließen des Hilfs-Greifers aufweisen.

10. Werkstück-Spannvorrichtung nach einem der vorhergehenden Ansprüche, wobei die Betätigungseinheit (20, 21, 22, 23, 25, 26) und der Hilfs-Greifer (14) eine Einheit bilden, die in eine Greiferausnehmung (13) in den Bearbeitungs-Spannmitteln (5, 8) aufgenommen ist.

11. Werkstück-Spannvorrichtung nach einem der vorhergehenden Ansprüche, wobei der Hilfs-Greifer (14) konzentrisch zu den Bearbeitungs-Spannmitteln (5, 8) angeordnet, insbesondere entlang der Längsachse der Bearbeitungs-Spannmittel verschieblich ist.

12. Werkstück-Spannvorrichtung nach einem der vorhergehenden Ansprüche, wobei die Bearbeitungs-Spannmittel (5, 8) eine sich entlang einer Achse erstreckende, vorzugsweise zylindrische, Werkstückauflage (8) aufweisen, an deren Stirnseite das Werkstück (4) einspannbar ist, wobei der Hilfs-Greifer (14) koaxial zu der Werkstückauflage angeordnet und über diese entlang der Achse auf das an der Stirnseite anliegende Werkstück schiebbar ist.

13. Werkstück-Spannvorrichtung nach einem der vorhergehenden Ansprüche, wobei die Bearbeitungs-Spannmittel einen Halter (5) und einen Gegenhalter (6) aufweisen, zwischen denen das Werkstück (4) einspannbar ist, wobei der Halter zusammen mit einem Maschinentisch (2) in den und aus dem Bearbeitungsraum bewegbar ist und der Gegenhalter fest im Bearbeitungsraum angeordnet ist.

14. Werkstück-Spannvorrichtung nach einem der vorhergehenden Ansprüche, wobei der Hilfs-Greifer (14) einem in den und aus dem Bearbeitungsraum bewegbaren Maschinentisch (2) zugeordnet ist.

15. Werkstück-Spannvorrichtung nach einem der vorhergehenden Ansprüche, wobei die Bearbeitungs-Spannmittel (5, 8) und der Hilfs-Greifer (14) hängend angeordnet sind.
